# EUROPEAN PATENT APPLICATION

(11) **EP 4 510 023 A1**
(43) Date of publication of application: **19.02.2025**
(21) Application number: 23192017.4
(22) Date of filing: 17.08.2023
(51) Int. Cl.: G06F 21/52, G06F 11/16, G06F 21/55, G06F 21/75

(54) **DATA PROCESSING COMPONENT AND COMPUTER PROCESSOR**

(71) Applicant: Nagravision Sàrl, 1033 Cheseaux-sur-Lausanne (CH)
(72) Inventor: PELLETIER, Herve, 1033 Cheseaux-sur-Lausanne (CH)
(74) Representative: Mewburn Ellis LLP

(57) **Abstract**

A data processing component comprises a fault attack shielding and detection arrangement. Specifically, the data processing component comprises: a first layer comprising: a first data processing element, the first data processing element configured to receive a control input and to execute a predetermined operation on the control input to generate a control output; and a first comparator configured to compare the control output with an expected control output, and to generate a fault status signal if the control output is different from the expected control output; and a second layer comprising: a second data processing element identical to the first data processing element, configured to receive a first operational input and to execute the same predetermined operation on the first operational input to generate a first operational output. A computer processor may comprises the data processing component.

## Description

### TECHNICAL FIELD OF THE INVENTION

The present invention relates to a data processing component which comprises a fault attack detection and shielding arrangement, and a computer processor including the data processing component.

### BACKGROUND TO THE INVENTION

Moore's Law is the observation that the number of transistors in an integrated circuit doubles approximately every two years. This arises as a result of advances in the semiconductor industry enabling the shrinkage of the technology utilized in integrated circuits. One development which has enabled this shrinking in integrated circuit components is the adoption of a 3D packaging approach.

With this approach it is possible to *stack* different chiplets or layers of functionalities in the same chip packaging and so to exploit the third dimension, contrary to the traditional approach. It allows chip manufacturers to increase considerably the number of transistors per unit surface area and therefore also the number of transistors per chip.

A vertical 3D die stack (e.g. a monolithic 3D chip) may employ hybrid bonding (wafer-to-wafer of wafer-to-die) and can offer a higher level of integration. This approach has been adopted by Intel^{®} with its announcement to target 1 trillion transistors for one chip before 2030.

The present application is related to protection against fault attacks, specifically fault attacks which rely on the application of electromagnetic radiation (usually laser light) on a component of a chip, or other data processing component. In a fault attack, electromagnetic radiation is directed towards the chip, or a specific component thereof, in order to disrupt the operation of that chip or component, thereby effecting a fault. The aim of such acts is to prevent the chip, or component thereof, from executing its desired function, or to induce an error in the processing performed by the chip or component.

Known techniques for protecting a data processing component such as a chip from fault attacks generally rely on detecting the fault attack, and making downstream processing decisions based on the detection of the fault attack. The parts of a data processing component which are most vulnerable to fault attacks are those parts which perform sensitive or critical operations, such as components processing security critical information, or components which execute internal protection mechanisms. It is these components which are most desirably disrupted by malicious actors.

Accordingly, known techniques for detection of fault attacks rely on redundancy, by providing more than one identical data processing element on the data processing component, each of which data processing element is configured to execute the critical operation on an identical input. The data processing component then comprises a comparator which is configured to compare the output of the two redundant data processing elements. Because the redundant data processing elements are executing the same operation on the same input, it is expected that the outputs are identical. Thus, if the comparator detects that the outputs are different, it can be inferred that one of the redundant data processing elements has fallen victim to a fault attack.

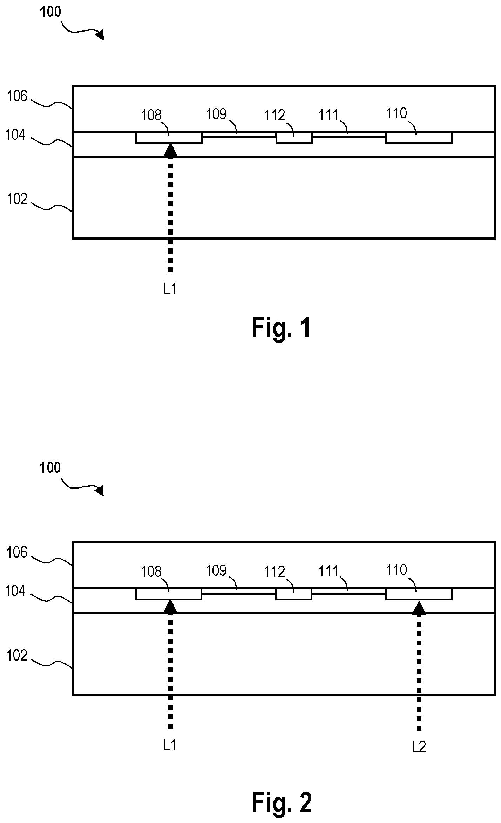

This is illustrated in Fig. 1, which shows a data processing component 100, such as a chip, or the like. The data processing component 100 comprises a plurality of layers: a substrate 102, a logic layer 104, and a shield layer 106. In the example shown, the logic layer 104 may be a central processing unit (CPU) layer or an arithmetic logic unit (ALU) layer. The shield layer 106 may also serve as a power line. The logic layer 104 comprises a first redundant data processing element 108 and a second redundant data processing element 110. The first redundant data processing element 108 and the second redundant data processing element 110 are each configured to receive an identical input, and to execute an identical operation on at input. As a result, it is expected that they will generate identical outputs. The logic layer 104 further comprises a comparator 112 which is configured to receive the outputs of the first redundant data processing element 108 and the second redundant data processing element 110 via traces 109 and 111, respectively. In an arrangement such as the arrangement shown in Fig. 1, the data processing component 100 is vulnerable to a fault attack via the substrate 102, which may be a thinned substrate 102. This is because the shield layer 106 protects the first redundant data processing element 108 and the second redundant data processing element 110 from such an attack, by acting as a physical shield. The substrate 102 may be thinned by the attached to improve the efficiency of the laser.

Fig. 1 depicts a first type of fault attack to which the data processing component 100 is generally resistant. In the fault attack a beam of laser light L1 is directed towards the first redundant data processing element 108, which resides in the logic layer 104. The laser light L1 may induce a fault in the processing executed by the first redundant data processing element 108. This means that the output of the first redundant data processing element 108 will no longer be identical to the output of the second redundant data processing element 110. As a result, the comparator 112, on comparing the two outputs, will detect that they are different, and generate a signal indicating that a fault attack has been detected.

Fault attacks have increased in sophistication. Fig. 2 depicts a second type of fault attack, which is more sophisticated that the first type of fault attack depicted in Fig. 1. The data processing component 100 of Fig. 2 is identical to the data processing component 100 shown in Fig. 1, and identical reference numerals are used to denote identical features. In the fault attack shown in Fig. 2, two lasers are used. Specifically, a first beam of laser light L1 is directed towards the first redundant data processing element 108, and a second beam of laser light L2 is directed towards the second redundant data processing element 110. It is possible to control the beams of laser light L1, L2 such that they induce the same error in the first redundant data processing element 108 and the second redundant data processing element 110. As a result, the output of the first redundant data processing element 108 will be the same as the output of the second redundant data processing element 110, even though both outputs will contain an error. The two outputs will contain the same error. Because the outputs are the same, the comparator 112 will not detect the interference, and the fault attack will remain undetected.

Thus, the structure of data processing element 100 is insufficient to detect sophisticated fault attacks of the kind shown in Fig. 2. Typical ways of addressing this issue generally involve the addition of more redundant data processing element, but this only increases the security linearly.

The present inventors have proposed a solution to this problem which leverages the vertical stacking approach which is used more commonly now to increase the processing capacity of an individual data processing element.

### SUMMARY OF THE INVENTION

At a high level, the present invention aims to address the problems outlined in the previous section of this patent application by providing a data processing element comprising a fault attack shielding and detection arrangement. More specifically, the data processing element comprises a first data processing element in a first layer and a second data processing element in a second layer. The first data processing element in the first layer may act as a shield to prevent electromagnetic radiation from being incident on the second data processing element in the second layer. An expected output of the first data processing element in the first layer may be compared with an actual output in order to detect interference in the form of a fault attack.

Accordingly, a first aspect of the present invention provides a data processing component comprising a fault attack shielding and detection arrangement, the data processing component comprising: a first layer comprising: a first data processing element, the first data processing element configured to receive a control input and to execute a predetermined operation on the control input to generate a control output; and a first comparator configured to compare the control output with an expected control output, and to generate a fault status signal if the control output is different from the expected control output; and a second layer comprising: a second data processing element identical to the first data processing element, configured to receive a first operational input and to execute the same predetermined operation on the first operational input to generate a first operational output.

The advantages provided by the data processing element of the first aspect of the invention are at least twofold. Firstly, it is possible to detect a fault attack based on the comparison of the control output with the expected control output. Secondly, the first layer and the first data processing element may act as a shield which either prevents transmission of, or significantly attenuates, electromagnetic radiation directed towards the second data processing element in the second layer, or *vice versa.* Data processing elements according to the first aspect of the invention are therefore more robust in their detection of fault attacks and defence against fault attacks.

Before describing various optional features of the data processing component of the first aspect of the present invention, we clarify some of the terms used above.

The term "data processing component" is used broadly to refer to any electronic component which has the capacity to execute logical operations on incoming data. Accordingly, the data processing component may comprise programming logic which is configured execute those logical operations on the incoming data. The data processing component may be a processor of a computer or computing device, or may be a component of a processor of a computer or computing device, such as a chip or other equivalent integrated circuit which forms a sub-module of a processor. For example, the data processing component may be a sub-module of a processor which is responsible for executing a particular subset of operations. A "data processing element" is a smaller entity which is contained within the data processing component, and represents a subset of the data processing component which is configured to execute a particular operation or operations, specifically the predetermined operation. Accordingly, the data processing element may comprise a subset of the programming logic comprised by the data processing component.

Two kinds of inputs are defined, a "control input", and an "operational input". In the context of the present invention, a "control input" is an input which is generated solely for the purpose of testing the first data processing element. The expected control output, resulting from the execution of the predetermined operation on the control input, is preferably either known or easily determined. The control input preferably bears no relevance to the "real" data which is processed by the data processing element. Such an input is used because, if a fault attack disrupts the operation of the first data processing element, it does not give rise to any issues, because it is control data, or dummy data, processing of which is not essential (and is, in fact, entirely irrelevant) for the "real" operation of the data processing component. In contrast, an "operational input" refers to the real data which is being processed by the data processing component (specifically the second data processing element thereof). An "operational output" is the output produced as a result of the execution of the predetermined operation on an operational input.

The term "comparator" is used to refer to an electronic component which is configured to receive two inputs, and to generate an output based on a comparison of the two inputs. The control output and operational output may comprise electronic signals having a voltage profile and/or current profile. In those cases, the comparator may be configured to compare the voltages and/or currents of the inputs. Specifically, in the context of the present invention, a comparator may be configured to generate a fault status signal if it determines that the two inputs it receives are different. The term "fault status signal" is used to refer to any electronic signal which is indicative of the detection of a fault. Such a signal may alternatively be referred to as an alarm signal or a trigger signal. Optionally, the comparator may be configured to generate a normal status signal if it is determined that the two inputs it receives are identical. The term "normal status signal" is used to refer to any electronic signal which is indicative that no fault has been detected.

We now discuss various optional features of the data processing component of the first aspect of the invention. It should be stressed that any, some, or all of the optional features set out below may be combined with any other unless such a combination is clearly technically incompatible, or context dictates otherwise.

We first discuss the structure of the data processing component in more detail. The first layer may be mounted on a substrate, which may be a planar substrate. Herein, the term "substrate" is used to refer to any component having a mounting surface on which another component may be mounted. The substrate may be a passive component, i.e. it may not form e.g. a processing layer such as a logic layer. The thickness of the substrate, in a direction perpendicular to the plane of the substrate, is preferably constant, or substantially constant, and may be no less than 50 µm, no less than 75 µm, or no less than 100 µm. The thickness of the substrate, again in a direction perpendicular to the plane of the substrate, may be no more than 200 µm, no more than 250 µm, no more than 300 µm, no more than 400 µm, or no more than 500 µm. The substrate may be made from silicon, or other materials such as diamond, or III-V or II-VI semiconductor materials.

In a direction perpendicular to the planar substrate, the second layer may be further away from the planar substrate than the first layer. In this manner, the first layer may shield the second layer from electromagnetic radiation. This is advantageous because fault attacks are generally executed from the substrate side of the data processing component, and in this case, the first layer of the data processing component comprises the first data processing element which receives a control input only, i.e. it is not involved in the processing of any real data. This means that the layer which processes real data is shielded by a layer which processes only dummy, or control, data. Another advantage becomes apparent when one adopts the viewpoint of the malicious actor. In seeking to identify a data processing element in which to induce an error, such a malicious actor would need to perform some kind of probing operation in order to locate such a data processing element. During such a probing operation, because the first data processing element is closer to the substrate than the second data processing element, it is more likely to be identified than the second data processing element. As a result, malicious actors would more likely target the first data processing element. Evidently, this is desirable because the first data processing element handles a control input only (i.e. no "real" data). Thus, the first data processing element acts as a honeypot, enticing the malicious actor to perform the fault attack on it, thereby causing them to be detected, and appropriate action taken.

In addition to the first layer itself forming a shield, the data processing elements may provide a shielding effect. Specifically, the data processing elements may comprise metallic traces in which the logic is implemented, which acts to absorb, and therefore attenuate electromagnetic radiation. Thus, by aligning the data processing elements in different layers, it is possible to achieve an additional shielding effect. Accordingly, the first layer may be a first planar layer and the second layer may be a second planar layer. The first planar layer may be parallel or substantially parallel to the second planar layer. The first and second planar layers may also be parallel to the planar substrate. Herein, "parallel" is used to mean "parallel or substantially parallel". In this arrangement, when viewed in a direction perpendicular to the first planar layer, the second planar layer, or the planar substrate, the first data element may at least partially overlap with the second data processing element. In this way, the first data processing element may form at least a partial shield configured to reduce transmission of electromagnetic radiation through the first data processing element to the second data processing element. In other arrangements, the second data processing element may form at least a partial shield configured to reduce transmission of electromagnetic radiation through the second data processing element to the first data processing element.

For a greater shielding effect, when viewed in the direction perpendicular to the first planar layer, the second planar layer, or the planar substrate, the first data processing element may fully overlap with the second data processing element, to form a shield configured to prevent or reduce transmission of electromagnetic radiation through the first data processing element to the second data processing element. Alternatively, when viewed in the direction perpendicular to the first planar layer, the second planar layer, or the planar substrate, the second data processing element may fully overlap with the first data processing element, to form a shield configured to reduce or prevent transmission of electromagnetic radiation through the second data processing element to the first data processing element. Herein, by "fully overlap" it should be understood that one data processing element completely obscures the other so that when viewed in the direction perpendicular to the first planar layer, the second planar layer, or the planar substrate, it would not be possible to see the data processing element located on the other side of the data processing element which forms the shield, if all layers were transparent.

The data processing component may further comprise a shield layer, which may be a planar shield layer. The shield layer may be configured to prevent the transmission of electromagnetic radiation, or significantly to attenuate the electromagnetic radiation to the extent that the electromagnetic radiation is unable to disrupt the operation of the data processing elements. The shield may be metallic, and more specifically may comprise a material which is configured to prevent or reduce transmisson of electromagnetic radiation from the green part of the visible spectrum to the infrared part of the electromagnetic spectrum. For example, the shield may be configured to prevent or reduce transmission of electromagnetic radiation having a wavelength of 300 nm to 1500 nm, or from 440 nm to 1200 nm, or from 530 nm to 1100 nm. In the direction perpendicular to the planar substrate, the shield layer may be further away from the planar substrate than the first layer and the second layer. In this manner, the first layer and the second layer may be sandwiched between the planar substrate and the shield layer.

In order further to improve the capability of the data processing component to detect fault attacks, and respond accordingly, the second layer may further comprise a third data processing element which is identical to the first data processing element and the second data processing element. Accordingly, the third data processing element may be configured to receive a second operational input from which is identical to the first operational input, and to execute the same predetermined operation on the second operational input to generate a second operational output. The second layer may further comprise a second comparator which is configured to compare the first operational output and the second operational output, and to generate a fault status signal if the first operational input is different from the second operational output.

To demonstrate the advantage of such an arrangement consider a scenario in which a fault attack is orchestrated in which beams of laser light are directed towards the second data processing element and the third data processing element, the laser light being carefully generated to induce the same error in each of the second data processing element and the third data processing element. In this case, the first data processing element may act as a shield, reducing transmission of the laser light to the second data processing element. This in itself may be sufficient to mean that the laser light has a different effect on the second data processing element and the third data processing element, meaning that the second comparator would register a difference in the second operational output and the third operational output. Furthermore, the incidence of the laser light on the first data processing element would induce an error in its processing of the control input, meaning that its output would differ from the expected control output. As a result, the first comparator would also register a difference. Thus, using this arrangement, a fault status signal would be generated.

As discussed, the data processing component may form part of a computer processor, or the like. Accordingly, the data processing component comprises several layers which serve different functions. The first layer may be a logic layer, and/or the second layer may be a logic layer. Herein, the term "logic layer" is used to refer to a layer in a data processing component in which logical operations are executed in incoming data. The kinds of operations which may be executed are discussed later on in this patent application. Accordingly, the logic layer may comprise various logical components such as logic gates and the like. The data processing elements which are located in the logic layers may comprise a plurality of logical elements arranged in order to execute the predetermined operation. The logic layer may be a CPU logic layer or an ALU logic layer.

In addition to the first layer and the second layer which contain, respectively, the first data processing element and the second data processing element, the data processing component may comprise one or more intervening layers which are located between the first layer and the second layer. The intervening layers may also be logic layers like the first layer and the second layer. However, they may be other types of function layer. For example, the one or more intervening layers may comprise one or more of a memory layer, a sensor layer (for example, an accelerometer, a temperature sensor, a pressure sensor, a magnetic sensor, a light sensor, a moisture sensor, a chemical sensor, or any other kind of suitable sensor, depending on the intended function of the data processing component), a power layer (which may include regulators or detectors, for example), or a tensor processing unit (which is an AI accelerator ASIC) for implementations in which the data processing component is used for the execute of machine-learning algorithms or models.

We now discuss in more detail the nature of the predetermined operation. The predetermined operation is preferably a deterministic operation or algorithm. Herein, "deterministic" refers to an algorithm in which the same input will always produce the same output, with the underlying machine always passing through the same sequence of states. Hardware errors can cause the state of a machine (i.e. the data processing element) to change in an unexpected way, thereby inducing a fault. It is for this reason that data processing elements configured to execute deterministic predetermined operations are secure to fault attacks. Predetermined operations which are particularly desirable to protect include operations which implement security functions, cryptographic functions, validation functions, or verification functions of the data processing component, particularly those relying on data which is generally kept secret.

In one example, the predetermined operation may be an encryption operation. The control input may then comprise a control message to be encrypted, and the operational input may comprise an operational message to be encrypted. The first operational output may be a first encrypted message, the control output may be a second encrypted message, and the expected control output may be an expected encrypted message. Equivalently, the predetermined operation may be a decryption operation. The control input may then comprise a control message to be decrypted, and the operational input may comprise an operational message to be decrypted. The first operational output may be a first decrypted message, the control output may be a second decrypted message, and the expected control output may be an expected decrypted message.

Another example of a predetermined operation is an authentication operation. The output of such an algorithm may be binary (i.e. "authenticated" or "not authenticated", or equivalent), and may be referred to as an "authentication output". To clarify, the execution of the authentication operation on an input (i.e. a control or operational input) gives rise to an authentication output. Accordingly, the control input may comprise a control input to be authenticated, and the operational input may comprise an operational input to be authenticated. The first operational output may be a first authentication output, the control output may be a second authentication output, and the expected control output may be an expected authentication output. The input may be in the form of a password, a PIN, a biometric input (e.g. a fingerprint, a retinal scan, a face ID, a voice ID, and the like), or any other suitable authentication input.

It is important to stress that the examples of predetermined operations set out above does not represent an exhaustive list, and are just illustrative examples.

The data processing component (or a larger processing component of which it is a part) may include a clock, where all processing stages take place at a frequency determined by that clock. Within the data processing component, the first data processing element, the second data processing element, and optionally the third data processing element may be synchronized with each other. More specifically, the first data processing element, the second data processing element, and optionally the third data processing element may be synchronized to the clock frequency. This ensures that the comparators are comparing "like for like", i.e. comparing the states of the data processing elements at the same stage of the predetermined operations. Alternatively, the comparators may compare only the outputs of the relevant data processing elements with each other.

The purpose of the present invention is to detect a fault attack and limit the side channel attack. We now discuss what may happen in the event that an attack is detected. As outlined elsewhere, if either the first comparator or the second comparator detects a difference between its two inputs, a fault status signal is generated. The fault status signal indicates the presence of a fault, and may be referred to equivalently as an "alarm signal" or a "trigger signal". The first comparator and/or second comparator may be configured to transmit the fault status signal to a fault response module. The fault response module may form part of the first data processing element, second data processing element, third data processing element, the data processing component, or a larger processing component of which the data processing component itself is a sub-component. Herein, the term "module" is used to refer to a functional module which may be implemented in software (e.g. a section of code stored on the component) or hardware (e.g. a separate physical module). In response to receiving the fault status signal, the fault response module may be configured to execute a shutdown operation. The severity of the shutdown operation depends on how critical the detection of the fault attack is. For example, the shutdown operation may simply be a shutdown of the data processing component, or the larger component of which it is a sub-component. In other more critical cases, the shutdown operation may further comprise erasing some or all of the data stored on the data processing component or the larger component of which it is a sub-component. In more critical cases still, the shutdown operation may further comprise rendering the data processing component permanently inoperable. In more critical cases still, the shutdown operation may further comprise rendering the larger component of which the data processing component is a sub-component permanently inoperable.

The first aspect of the invention relates to a data processing component. There has been frequent mention of a larger component or larger processing component of which the data processing component of the first aspect of the invention is a sub-component. Such a larger component may be in the form of a computer processor. Herein "computer processor" refers to a processor of any computing device, such as a desktop computer, laptop computer, smartphone, tablet, or any other computational device, including processors found in other devices/machinery. Accordingly, a second aspect of the invention provides a computer processor according to the first aspect of the invention. The computer processor may comprise a clock generator configured to generate a clock signal, wherein the first data processing element, the second data processing element and optionally, the third data processing element are each synchronized with the clock signal. The optional features set out above with respect to the first aspect of the invention also apply to the second aspect of the invention, except where clearly technically incompatible, or where context clearly dictates otherwise.

In other words, the invention includes the combination of the aspects and preferred features described except where such a combination is clearly impermissible or expressly avoided.

### BRIEF DESCRIPTION OF THE DRAWINGS

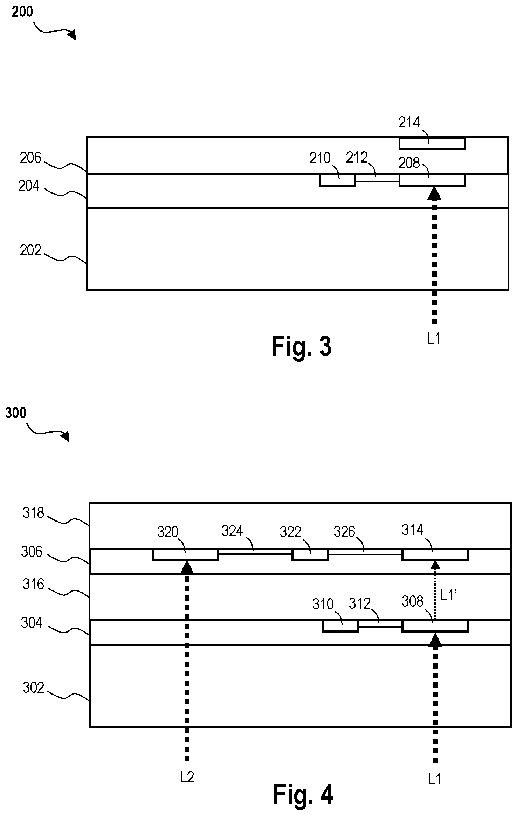

Embodiments of the present invention will now be described with reference to the accompanying drawings, in which:
▪ Fig. 1 is a schematic diagram of a known data processing component undergoing a fault attack.
▪ Fig. 2 is a schematic diagram of a known data processing component undergoing a more sophisticated fault attack.
▪ Fig. 3 is an implementation of a data processing component according to the first aspect of the present invention, undergoing a fault attack.
▪ Fig. 4 is an implementation of a data processing component according to the first aspect of the present invention, undergoing a more sophisticated fault attack.

### DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

Figs. 1 and 2 show prior art data processing components 100 and have been described in detail in the "Background" section of this patent application. This section begins with a description of Fig. 3.

Fig. 3 is a schematic illustration of a data processing component 200 (or part thereof) according to the first aspect of the present invention, in order to illustrate a high-level implementation of the invention. The data processing component comprises three layers: a substrate layer 202, a first logic layer 204, and a second logic layer 206. In the data processing element 200, the substrate layer 202, first logic layer 204, and second logic layer are all planar, and parallel, but this need not be the case. The first logic layer 204 is formed on the substrate layer 202, and the second logic layer 206 is formed on the first logic layer 204. However, it will be appreciated that this need not be the case, and there may be intervening layers between the substrate layer 202 and the first logic layer 204, and/or between the first logic layer 204 and the second logic layer 206. The relative thicknesses of the substrate layer 202, first logic layer 204, and second logic layer 206 is also arbitrarily selected in Fig. 3, and should in no way be construed as limiting.

The first logic layer comprises a first data processing element 208, which is connected to a first comparator 210 via an electrical trace 212. The first data processing element 208 is configured to execute a predetermined operation on incoming data. Specifically, in the data processing component 200, the first data processing element is configured to execute the predetermined operation on a control input (not shown). The control input is a fixed input which is unrelated to the "real" data which is processed by the data processing component 200. The output of the predetermined operation on the control input is referred to herein as a first control output, which is transmitted to the first comparator 210 via the electrical trace 212. The first comparator 210 is then configured to compare the first control output with an expected control output, which is the expected output resulting from the execution of the predetermined operation on the control input. The first comparator 210 may retrieve the expected control output from a memory or other appropriate storage component, or may receive it from another component (not shown) within the first logic layer 204. If the first comparator 210 determines that the control output is different from the expected control output, the first comparator 210 is configured to output a fault status signal (e.g. in the form of a predetermined voltage signal). If there is no difference detected by the first comparator 210 between the control output and the expected control output, no fault status signal is generated. In some cases, a normal status signal may be generated and output.

The second logic layer 206 includes a second data processing element 214. The second data processing element 214 is identical to the first data processing element 208, and crucially is configured to execute an identical predetermined operation. The second data processing element 214 is configured to receive a first operational input (not shown) and to execute the predetermined operation on it, to generate a first operational output. The first operational input differs from the control input in that it comprises real data, i.e. the second data processing element 214 is used to perform the real processing of data on the data processing component 200.

The data processing component may optionally comprise power lines at a front side and a back side of a wafer.

Fig. 3 shows a fault attack, in which electromagnetic radiation, for example in the form of laser light L1 of a selected wavelength is incident on the data processing component 200. The arrangement of data processing component 200 provides at least two means of defence against the fault attack:
i. Firstly, as shown in Fig. 3, the laser light L1 is incident on the first data processing element 208. The incidence of the laser light L1 on the first data processing element 208 can alter the state of the logic components within the first data processing element 208. As a result, errors may be induced in the execution of the predetermined operation. The control output will therefore not match the expected control output as a consequence of the fault attack, and the first comparator 210 will detect a difference between the control output and the expected control output. A fault status signal will therefore be generated. Because the first data processing element 308 only receives a control input, i.e. no real data, it does not matter that the execution of the predetermined operation is disrupted.
ii. Secondly, even though the laser light L1 may penetrate the substrate 202, the first data processing element 208 comprises metallic components which are used to implement the logical components enabling the execution of the predetermined operation. These metallic components are able to absorb at least some of the laser light L1. This either significantly attenuates or completely prevents the laser light from being incident on the second data processing element 214. As a result, the presence of the first data processing element 208 in a location where it forms an electromagnetic radiation shield against the laser light L1 for the second data processing element 214 also reduces the effectiveness of fault attacks on the data processing element 214 which executes the predetermined operation on real data.

Fig. 4 illustrates schematic arrangement of components in a data processing component 300, which is able to offer effective protection against sophisticated fault attacks in which laser light is directed at the data processing component 300 in an attempt to induce the same fault in two identical data processing components, so that a comparator is not able to detect a difference in their outputs, and the fault goes undetected.

The data processing component comprises five layers: a substrate layer 302, a first logic layer 304, an intervening layer 316, a second logic layer 306, and a shield layer 318. In the data processing component 300, the substrate layer 302, first logic layer 304, intervening layer 316, second logic layer 306, and shield layer 318 are all planar, and parallel, but this need not be the case. The first logic layer 304 is formed on the substrate layer 302. The intervening layer 316, which may be a memory layer such as a RAM layer, is formed on the first logic layer 304. The second layer 306 is formed on the intervening layer 316. The shield layer 318 is formed on the second layer 306. Naturally, as with Fig. 3, it will be appreciated that this specific configuration of layers is for illustrative purposes only, and there may, for example, be additional intervening layers, logic layers, or shield layers, for example. The relative thicknesses of the substrate layer 302, first logic layer 304, intervening layer 316, second logic layer 306, and shield layer 318 are also arbitrarily selected in Fig. 4, and should in no way be construed as limiting.

Like in the data processing component of 200 of Fig. 3, the first logic layer 304 comprises a first data processing element 308. The first data processing element 308 is configured to execute a predetermined operation on incoming data. Specifically, in the data processing component 300, the first data processing element is configured to execute the predetermined operation on a control input (not shown). The control input is a fixed input which is unrelated to the "real" data which is processed by the data processing component 300. The output of the predetermined operation on the control input is referred to herein as a first control output, which is transmitted to the first comparator 310 via the electrical trace 312. The first comparator 310 is then configured to compare the first control output with an expected control output, which is the expected output resulting from the execution of the predetermined operation on the control input. The first comparator 310 may retrieve the expected control output from a memory or other appropriate storage component, or may receive it from another component (not shown) within the first logic layer 304. If the first comparator 310 determines that the control output is different from the expected control output, the first comparator 310 is configured to output a fault status signal (e.g. in the form of a predetermined voltage signal). If there is no difference detected by the first comparator 310 between the control output and the expected control output, no fault status signal is generated. In some cases, a normal status signal may be generated and output.

The second logic layer 306 of the data processing component 300 is slightly different from the second logic layer 206 of data processing component 200. The second logic layer 306 includes a second data processing element 314. The second data processing element 314 is identical to the first data processing element 308, and crucially is configured to execute an identical predetermined operation. The second data processing element 314 is configured to receive a first operational input (not shown) and to execute the predetermined operation on it, to generate a first operational output. The first operational input differs from the control input in that it comprises real data, i.e. the second data processing element 314 is used to perform the real processing of data on the data processing component 300. The second logic layer 306 further comprises a third data processing element 320. The third data processing element 320 is identical to the first data processing element 308 and the second data processing element 314, and is configured to execute an identical predetermined operation as the two. The third data processing element 320 is configured to receive a second operational input (not shown) which is identical to the first operational input (e.g. from the same source) and to execute the predetermined operation on it, to generate a second operational output. As with the first operational output, the second operational input differs from the control input in that it comprises real data, i.e. the second data processing element 320 is also used to perform the real processing of data on the data processing component 300.

The second logic layer 306 further comprises a second comparator 322, which is connected to the second data processing element 314 via electrical trace 326 and the third data processing element 320 via electrical trace 324.

The second comparator 322 is then configured to compare the first operational output received from the second data processing element 314 with the second operational output received from the third data processing element 320. If the second comparator 322 determines that the control output is different from the second operational output, the second comparator 322 is configured to output a fault status signal (e.g. in the form of a predetermined voltage signal). If there is no difference detected by the second comparator 322 between the first operational output and the second operational output, no fault status signal is generated. In some cases, a normal status signal may be generated and output.

Fig. 4 illustrates a fault attack in which, in which electromagnetic radiation, for example in the form of laser light L1 and laser light L2 of a selected wavelength are incident on the data processing component 300. The arrangement of data processing component 300 provides at least two means of defence against the fault attack:
i. Firstly, as shown in Fig. 4, the laser light L1 is incident on the first data processing element 308. The incidence of the laser light L1 on the first data processing element 308 can alter the state of the logic components within the first data processing element 308. As a result, errors may be induced in the execution of the predetermined operation. The control output will therefore not match the expected control output as a consequence of the fault attack, and the first comparator 310 will detect a difference between the control output and the expected control output. A fault status signal will therefore be generated. Because the first data processing element 308 only receives a control input, i.e. no real data, it does not matter that the execution of the predetermined operation is disrupted.
ii. Secondly, even though the laser light L1 may penetrate the substrate 302, the first data processing element 308 comprises metallic components which are used to implement the logical components enabling the execution of the predetermined operation. These metallic components are able to absorb at least some of the laser light L1. This either significantly attenuates or completely prevents the laser light from being incident on the second data processing element 314. As a result, the presence of the first data processing element 208 in a location where it forms an electromagnetic radiation shield against the laser light L1 for the second data processing element 314 also reduces the effectiveness of fault attacks on the data processing element 314 which executes the predetermined operation on real data.
iii. Thirdly, even in the event that the first data processing element 308 forms an insufficient shield against the laser light L1, and it is able to penetrate sufficiently to have a disruptive effect on the execution of the predetermined operation by the second data processing element 314 (as illustrated by the penetration of laser light L1' in Fig. 4), the presence of the third data processing component 320 and the second comparator 322 mean that the fault attack may still be detected. Specifically, even though laser light L1' is still able to impinge on the second data processing element 314, because it is attenuated by virtue of the shielding provided by the first data processing element 308, it is unlikely to impart an identical disruption to the laser light L2 which is incident on third data processing element 320. As a result, although an error may be induced in the execution of the predetermined operation by both second data processing element 314 and third data processing element 320, the errors are highly unlikely to be identical. As a result, the first operational output from the second data processing element 314 and the second operational output from the third data processing element 320 will not be identical. This will be detected by the second comparator 322 and a fault status signal will be generated, alerting the system to the fault attack, despite its more sophisticated nature.

Thus, implementations of the data processing components 200, 300 enable the detection of fault attacks of varying levels of sophistication.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A data processing component comprising a fault attack shielding and detection arrangement, the data processing component comprising:
a first layer comprising:
a first data processing element, the first data processing element configured to receive a control input and to execute a predetermined operation on the control input to generate a control output; and
a first comparator configured to compare the control output with an expected control output, and to generate a fault status signal if the control output is different from the expected control output; and
a second layer comprising:
a second data processing element identical to the first data processing element, configured to receive a first operational input and to execute the same predetermined operation on the first operational input to generate a first operational output.

2. The data processing component of claim 1, wherein:
the first layer is mounted on a planar substrate; and
in a direction perpendicular to the planar substrate, the second layer is further away from the planar substrate than the first layer.

3. The data processing element of claim 2, wherein:
the first layer is a first planar layer, and the second layer is a second planar layer, the first planar layer being parallel to the second planar layer; and
when viewed in a direction perpendicular to the first planar layer and the second planar layer, the first data processing element at least partially overlaps with the second data processing element, to form at least a partial shield configured to reduce or prevent transmission of electromagnetic radiation through the first data processing element to the second data processing element.

4. The data processing component of claim 3, wherein:
when viewed in the direction perpendicular to the first planar layer, the first data processing element fully overlaps with the second data processing element, to form a shield configured to reduce or prevent transmission of electromagnetic radiation through the first data processing element to the second data processing element.

5. The data processing component of any one of claims 2 to 4, further comprising:
a shield layer configured to reduce or prevent the transmission of electromagnetic radiation to the first data processing element and the second data processing element;
wherein when viewed in a perpendicular to the planar substrate, the shield layer is further away from the planar substrate than the first layer and the second layer.

6. The data processing component of any one of claims 1 to 5, wherein:
the second layer further comprises:
a third data processing element identical to the first data processing element and the second data processing element, the third data processing element configured to receive a second operational input which is identical to the first operational input, and to execute the same predetermined operation on the second operational input to generate a second operational output; and
a second comparator configured to compare the first operational output with the second operations output, and to generate a fault status signal if the first operational output is different from the second operational output.

7. The data processing element of any one of claims 1 to 6, wherein:
the first layer is a logic layer; and/or
the second layer is a logic layer.

8. The data processing component of any one of claims 1 to 7, further comprising:
one or more intervening layers between the first layer and the second layer.

9. The data processing component of claim 8, wherein:
the one or more intervening layers comprise one or more of: a memory layer, a logic layer, a sensor layer, a power layer, or a tensor processing unit.

10. The data processing element of any one of claims 1 to 9, wherein:
the predetermined operation is a deterministic operation.

11. The data processing element of claim 10, wherein:
the determination operation comprises one or more of: an encryption operation, a decryption operation, and an authentication operation.

12. The data processing element of any one of claims 1 to 11, wherein:
the first comparator and/or the second comparator are configured to transmit the fault status signal to a fault response module, the fault response signal being configured to execute a shutdown operation in response to receiving the fault status signal.

13. A computer processor comprising the data processing component of any one of claims 1 to 12.

14. The computer processor of claim 13 comprising:
a clock generator configured to generate a clock signal, wherein the first data processing element, the second data processing element, and optionally the third data processing element are each synchronized with the clock signal.
